# EUROPÄISCHE PATENTSCHRIFT

(11) **EP 0 344 445 B1**
(45) Veröffentlichungstag und Bekanntmachung des Hinweises auf die Patenterteilung: **25.08.1993**
(21) Anmeldenummer: 89107113.6
(22) Anmeldetag: 20.04.1989
(51) Int. Cl.: B61F 5/24, B61F 5/04, B61F 5/12, B60G 17/08

(54) **Aufhängung für Fahrzeuge**
Vehicle suspension
Suspension pour véhicules

(30) Priorität: 28.05.1988 DE 3818179
(43) Veröffentlichungstag der Anmeldung: 06.12.1989
(73) Patentinhaber: AEG Westinghouse Transport-Systeme GmbH, D-13599 Berlin (DE)
(72) Erfinder: Bohn, Gerhard, Dr., D-8000 München 60 (DE)
(74) Vertreter: Rüthning, Wolfgang

(56) Entgegenhaltungen:
- EP-A- 0 243 613
- EP-A- 0 262 886
- WO-A-86/06807
- PATENT ABSTRACTS OF JAPAN vol. 9, no. 38 (M-358)(1761) 19 Februar 1985, & JP-A-59 179413 (SANWA SEIKI K.K.) 12 Oktober 1984,

## Beschreibung

Die vorliegende Erfindung betrifft eine Aufhängung für Fahrzeuge, insbesondere für schienengebundene Hochgeschwindigkeitsfahrzeuge, die zwischen der Fahrgastkabine und dem Fahrgestellt angeordnet ist und die mindestens eine weiche Feder mit niedriger Abfederungsfrequenz sowie ein parallel zu ihr geschaltetes Dämpfungsglied aufweist, wie es darüberhinausgehend im übrigen dem Oberbegriff des Anspruches 1 entnehmbar ist.

Eine derartige Aufhängung ist aus der EP-A 0 262 886 bekanntgeworden und ist bereits weitergehend als die üblichen rein passiven Aufhängungen mit Federungsfunktion der Fahrgastkabinen bei Eisenbahn und Magnetbahn. Beim Vordringen der Verkehrssysteme in höhere Geschwindigkeitsbereiche ergeben sich erhöhte Anforderungen an die Federungsfunktion der Aufhängung, die durch eine passive Federung nur noch unter schlechtem Fahrkomfort bewältigt werden kann.

Um die Fahrgastkabine schwingungsmäßig von den Fahrwegunebenheiten zu entkoppeln, muß die Feder weich sein. Andererseits sollte die Federung möglichst als harte Kopplung zu den Gestellen wirken, um bei Seitenwind mit Zugbegegnung oder Tunnelausfahrt keine zu hohen Beschleunigungen an der Fastgastkabine auftreten zu lassen.

Weil dazu - um so die Auslenkungen zu begrenzen - die Federkennlinie nichtlinear ausgebildet werden muß (weich im Arbeitsbereich, hart in den Anschlagbereichen) treten bei großen Kraftstörungen hohe Beschleunigungswerte auf.

Eine praktische Grenze für weiche Federungssysteme liegt darin, daß bei Laständerungen an der Fahrzeugkabine die Federwege umso größer werden, je weicher die Federung ist. Um trotzdem Federungssysteme mit relativ niedrigen Frequenzen realisieren zu können, werden diese mit sogenannten Niveau-Steuerungen versehen die das Federungssystem zu einem aktiven System machen. Dabei wird in der Regel bei jedem aktiven Federungselement der Abstand zwischen der abgefederten und der unabgefederten Masse gemessen und in Abhängigkeit dieses Abstands das Federungselement verstellt. So kann z.B. bei aktiven Luftfedern die Menge der Luft in der Feder in Abhängigkeit des erwähnten Abstandes verändert werden mit der Maßgabe, daß nach genügend langer Regelzeit ein vorgegebener Sollabstand zwischen der abgefederten und der unabgefederten Masse eingestellt wird.

Die Einsatzgrenzen eines derartigen aktiven Federungssystems sind schnell erreicht, wenn die Abfederungsfrequenz relativ niedrig, die Stell- und Rückstellgeschwindigkeit der Niveausteuerung relativ gering und der zugelassene Federweg klein bzw. begrenzt ist sowie dann, wenn die an der abgefederten Masse z.B. der Fahrzeugkabine angreifenden Laständerungen und insbesondere deren zeitliche Ableitung groß sind.

Zur Erhöhung des Fahrkomfort muß die Fahrgastkabine möglichst niederfrequent abgefedert sein, was z.B. durch weiche sogenannte Sekundärfederungssysteme realisiert werden kann. Derartige Sekundärfederungssysteme sind z.B. bei Magnetschwebefahrzeugen zwischen den Schwebegestellen und der Fahrgastkabine angeordnet. Dabei sollen die Stellwege der Federungssysteme möglichst klein sein, um z.B. Rollbewegungen der Fahrgastkabine zu vermeiden; andererseits sind die zeitlichen Änderungen der an der Fahrgastkabine angreifenden Lasten insbesondere bei Seitenwind relativ groß.

Wie Messungen gezeigt haben, sind z.B. bei einer Magnetschwebebahn mit horizontaler Feder, die eine nichtlineare Federkennlinie aufweist, beim Überfahren von Weichen Beschleunigungswerte an der Fahrgastkabine bis zu 2 m/s² bei einer Geschwindigkeit von 190 km/h aufgetreten. Die hohe Querbeschleunigung ist dabei eine Folge des Überschwingens der Fahrgastkabine in den harten Federbereich. Noch deutlicher fällt dieser Nachteil bei einer Zugbegegnung bei Seitenwind auf, wobei Beschleunigungswerte bis zu 12,7 m/s² auftreten können und die Auslenkungen über 11 cm erreichen können, bei einer statischen Auslenkung von nur ca. 8,5 cm.

Aus der DE-OS 35 37 325 ist ein aktives Federungslement für schienengebundene Hochgeschwindigkeitsfahrzeuge bekannt, das zwischen einer nichtabgefederten Masse und einer abgefederten Masse des Fahrzeugs angeordnet ist. Es weist einen Kraftpfad aus einer weichen Feder mit niedriger Abfederungsfrequenz und einem in Serie dazu geschalteten aktiven Stellglied auf, wobei das aktive Stellglied zur Niveau-Regelung des Abstandes zwischen den beiden Massen auf einen Sollwert dient. Parallel zu diesem Kraftpfad ist ein aktives Feder- bzw. Dämpfungselement vorgesehen, das eine von dem Federweg abhängige, zunächst niedrige und ab einem kritischen Federweg in beiden Richtungen progressive Dämpfungs- bzw. Rückstellcharakteristik aufweist.

Die weiche Feder kann eine Luftfeder sein mit einer vorzugsweise linearen Federkennlinie, während das aktive Stellglied ein längenveränderliches, geregeltes, hydraulisches Stellglied ist, dessen Länge in Richtung des Federweges veränderlich ist. Das aktive Feder- und Dämpfungselement ist ein hydraulisches kraftstellendes Stellglied, wobei jedoch dieser Druckschrift nicht zu entnehmen ist, wie dieses Stellglied nun anzusteuern ist, um den gewünschten Effekt zu erzielen.

In der eingangs angezogenen EP-A 0 262 886, von der ausgegangen wird, ist eine Federungsanordnung beschrieben, bei der einer weichen Feder mit niedriger Abfederungsfrequenz ein Dämpfungsglied mit steuerbarem Dämpfungsgrad parallel geschaltet ist. Das aktive Dämpfungsglied ist dabei mit einem Hydraulikkolben und einem über ein Drosselventil steuerbaren Bypass ausgebildet. Das Drosselventil ist mit einer Steuereinrichtung verbunden, die es als Funktion relativer Bewegungen, Auslenkungsgeschwindigkeit der Feder oder Beschleunigungswerten zwischen Fahrgastkabine und des Fahrgestells öffnet oder schließt. Es wird auf minimale Dämpfung (Drosselventil voll geöffnet) geregelt, wenn das Produkt von Auslenkung und Relativgeschwindigkeit zwischen dem Meßobjekt größer als 0 ist. Sensoren erfassen dabei ausschließlich Vertikalgrößen. Querbewegungen werden nicht berücksichtigt.

Für hohe Dämpfung, wenn sowohl eine positive Auslenkung als auch eine positve Auslenkungsgeschwindigkeit auftritt, ist das System nicht brauchbar, da die Dämpfung nur bei negativem Vorzeichen groß sein soll.

Aufgabe ist es, hier Abhilfe zu schaffen, wobei eine Aufhängung für Fahrzeuge insbesondere für schienengebundene Hochgeschwindigkeitsfahrzeuge zu schaffen, die es ermöglicht, biegeelastische Fahrwege für diese Fahrzeuge zu bauen, bei gleichbleibend hohem Fahrkomfort, so daß die Fahrgeschwindigkeit auch bei großem Seitenwind nicht reduziert werden muß.

Ausgehend von einer Aufhängung der eingangs näher genannten Art wird zur Lösung dieser Aufgabe vorgeschlagen, daß dem Dämpfungsglied neben dem steuerbaren Bypass ein zweiter Bypass mit konstanter Drosselwirkung zugeordnet ist und daß die Steuervorrichtung die seitlichen Beschleunigungswerte der Fahrgastkabine und des Fahrgestells berücksichtigt.

Vorzugsweise weist die Steuervorrichtung einen ersten Sensor für die Messung des Federweges auf, der mit einem Differenzierglied verbunden ist, einen zweiten Sensor für die Querbeschleunigung der Fahrgastkabine, der mit dem Eingang eines ersten Filters verbunden ist, einen dritten Sensor für die Querbeschleunigung des Fahrgestells, der mit dem Eingang eines zweiten Filters verbunden ist sowie ein Differenzglied, das mit den Ausgängen der beiden Filter verbunden ist und eine Auswahlschaltung, die sowohl mit dem Differenzglied als auch mit dem Differenzierglied verbunden ist und deren Ausgang mit dem Drosselventil verbunden ist.

Die Steuervorrichtung ist vorteilhafterweise derart ausgelegt, daß die Dämpfung des Dämpfungsgliedes im mittleren Bereich der Signale konstant ist und bei Abweichungen der Meßgrößen über einen vorgegebenen Sollwert ansteigt.

Zweckmäßig ist der zweite Bypass mit einer Sicherheitsdrossel versehen, die im regulären Betrieb geschlossen ist und bei Ausfall des Drosselventils diesen Bypass öffnet.

Bei einem weiteren bevorzugten Ausführungsbeispiel ist eine zusätzliche Feder vorgesehen, deren eines Ende am Unterteil der Fahrgastkabine befestigt ist und deren anderes Ende an einer Zwischenplatte befestigt ist. Parallel zu zusätzlichen Feder ist dabei ein passives Dämpfungsglied zwischen Fahrgastkabine und Zwischenplatte befestigt, während die Zwischenplatte über eine aktive Hydraulikanordnung mit dem Fahrgestell verbunden ist.

Die aktive Hydraulikanordnung ist vorteilhafterweise mit einer Steuervorrichtung verbunden, die einen Sensor für die Auslenkung der Feder, einen Sollwertgeber, ein Differenzglied, einen Regelverstärker und ein Tiefpaßfilter aufweist.

Mit der erfindungsgemäßen Ausgestaltung der Aufhängung wird der Vorteil erzielt, daß die seitlichen Maximalbeschleunigungen erheblich verringert sind, so daß auch bei hohen Geschwindigkeiten ein hoher Fahrkomfort aufrechterhalten wird. Dies ist insbesondere dann von Bedeutung, wenn billige elastische Fahrbahnträger einzusetzen sind, deren Durchbiegung unter Last bis zu 13 mm betragen kann. Damit ergibt sich eine Girlande, der die Fahrgestelle mit einer Amplitude von ca. 6,5 mm bei einer Geschwindigkeit von etwa 400 km/h folgen. Nimmt man eine Trägerlänge von 25 Metern an, ergibt sich damit eine zugeordnete Frequenz von f = v/l = 4,4 Hz.

Im folgenden wird die Erfindung anhand der Zeichnung näher erläutert, in der vorteilhafte Ausführungsbeispiele dargestellt sind. Es zeigen:
Fig. 1 schematisch ein erstes Ausführungsbeispiel einer erfindungsgemäßen Aufhängung für eine Magnetschwebebahn;
Fig. 2 ein Kennliniendiagramm für das Dämpfungsglied;
Fig. 3 ein Schaltbild für die Ansteuerung des Drosselventils im Dämpfungsglied;
Fig. 4 ein zweites Ausführungsbeispiel einer erfindungsgemäßen Aufhängung und
Fig. 5 ein Blockschaltbild des Regelkreises für die in Figur 4 dargestellte Hydraulikanordnung.

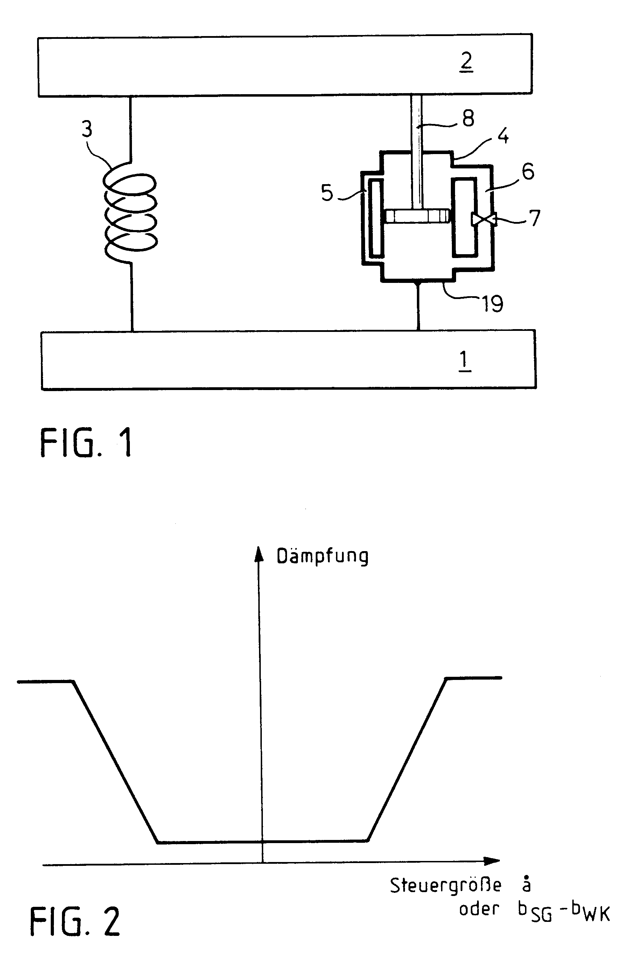

Von einer schienengebundenen Hochgeschwindigkeits-Magnetschwebebahn ist in Fig. 1 mit 1 das nichtabgefederte Schwebegestell bezeichnet und mit 2 eine Fahrgastkabine. Zwischen dem Gestell 2 und der Kabine 2 ist eine weiche Feder 3 und ein aktives Dämpfungsglied 4 vorgesehen, die parallel zueinander geschaltet sind.

Die Feder 3 kann eine Luftfeder mit niedriger Abfederungsfrequenz sein, die die Fahrgastkabine weitgehend von Gestellbewegungen entkoppelt und z.B. eine lineare Federkennlinie aufweist.

Das aktive Dämpfungsglied 4 weist einen Hydraulikkolben 8 auf, der mit der Fahrgastkabine 2 fest verbunden ist und ein Hydraulikgehäuse 19, das mit dem Gestell 1 verbunden ist. Das aktive Dämpfungsglied 4 ist mit einem steuerbaren Bypass 6, der einen größeren Querschnitt aufweist und in dem ein Drosselventil 7 vorgesehen ist und einem zweiten Bypass 5 mit relativ schmalem Querschnitt versehen. Mit dem Drosselventil 7 ist der Dämpfungsgrad des Dämpfungsgliedes 4 einstellbar. Dabei stellt sich der maximale Dämpfungsgrad über den zweiten Bypass 5 bei geschlossenem Drosselventil 7 ein. Da im ausgelenkten Zustand der Fahrgastkabine die Dämpfung gering sein soll, d.h. eine weiche Kupplung zum Gestell herrschen soll, wird das Drosselventil 7 vorzugsweise nach der Auslenkungsgeschwindigkeit der Feder 3 oder nach Beschleunigungswerten des Gestells 1 und der Fahrgastkabine 2 gesteuert.

Das Kennliniendiagramm von Fig. 2 zeigt in Abhängigkeit der Wirkung des aktiven Dämpfungsgliedes (Ordinate) abhängig von einer der Steuergrößen, d.h. der Federauslenkungsgeschwindigkeit a oder der Beschleunigungswerte b_{sg}, b_{wk}, wobei die letzteren beiden Werte die Querbeschleunigungen des Schwebegestells bzw. der Fahrgastkabine darstellen. Im mittleren Bereich bleibt die Dämpfung konstant, um bei regulärem Betrieb der Magnetschwebebahn ein Verhalten wie bei einer passiven Federung zu erhalten.

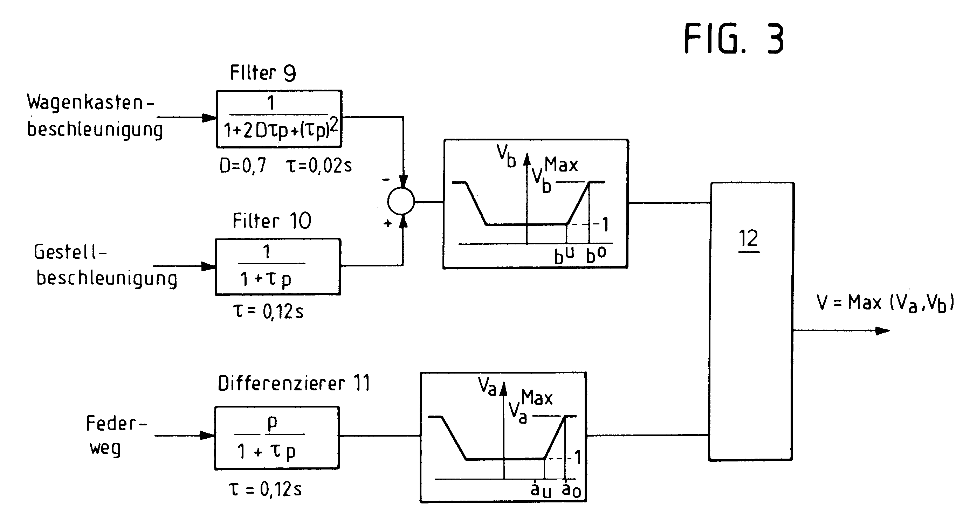

Fig. 3 zeigt einen geeigneten Steuerungsalgorithmus für das Drosselventil 7 von Fig. 1. Die von geeigneten Sensoren stammenden Signale für die Beschleunigungen der Fahrgastkabine und des Gestells bzw. für den Federweg müssen entsprechend dem Rauschanteil gefiltert werden. Die Beschleunigungssignale durchlaufen dabei die Filter 9 und 10 während das Signal a für den Federweg einen Differenzierer 11 durchläuft, um so ein Signal für die Federauslenkungsgeschwindigkeit a zu erhalten. Durch eine geeignete Auswahlschaltung 12 wird der Verstärkungsgrad V = max (Va, Vb) für die Dämpfung d ausgewählt.

Es wurden Simulationsrechnungen mit einer derartigen Aufhängung bei der Magnetschwebebahn Transrapid durchgeführt, wobei erreicht werden konnte, daß die Beschleunigungsspitze der Fahrgastkabine bei Weichenfahrt auf 1,75 m/s² reduziert worden ist und daß der Federweg 5 cm nicht mehr überschreitet. Eine starke Reduktion der Beschleunigungsspitzen wurden bei Zugbegegnung mit Seitenwind erhalten. Hier ergaben sich Maximalbeschleunigungen von 2,6 m/s² bzw. 2,2 m/s² für die Fahrgastkabine , wobei die Amplituden des Nachschwingens entsprechend niedrig sind. Der Federweg ist nahezu aperiodisch gedämpft und schwingt in seine Endlage schnell ein. In dieser Endlage wird der Dämpfungswert wieder auf seinen Minimalwert gesteuert (Fig. 2), so daß dann wieder eine geringe Kopplung zum Gestell besteht.

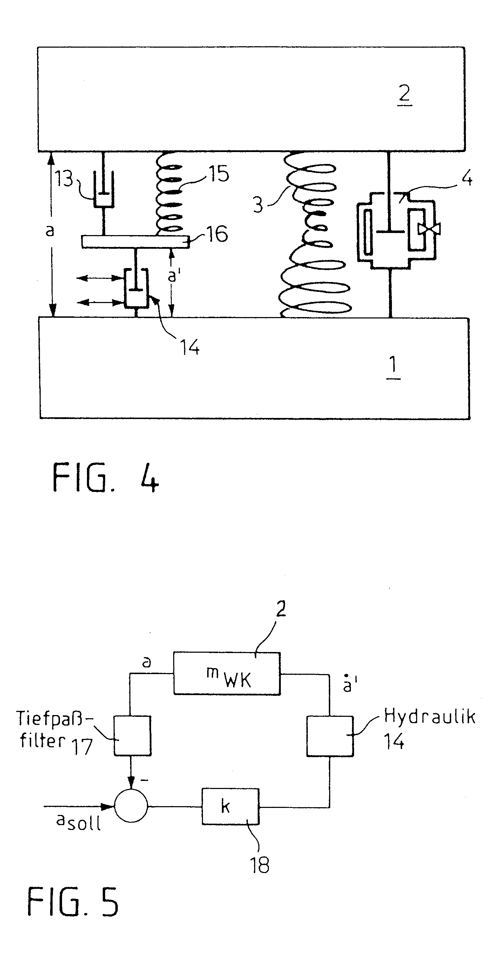

In Fig. 4 ist ein zweites Ausführungsbeispiel einer erfindungsgemäßen Aufhängung dargestellt. Parallel zu der weichen Feder 3, die hier eine nichtlineare Federungskennlinie aufweist und dem aktiven Dämpfungsglied 4 ist eine hydaulisch bewegbare Zwischenplatte 16 vorgesehen, die mit einer Feder 15 und einem passiven Dämpfer 13 mit der Fahrgastkabine 2 verbunden ist und andererseits über eine Hydraulikanordnung 14 mit dem Gestell 1 verbunden ist. Eine derartige Anordnung ist besonders vorteilhaft, um die Fahrgastkabine bei statischen Lasten , wie z.B. bei Kurvenfahrten oder bei Seitenwind, wieder in ihre Mittellage zu drücken. Dabei arbeitet die Hauptfeder 3 wieder im weichen Bereich, so daß der Fahrkomfort verbessert wird. Die Federn 3 und 15 sind dabei so aufeinander abgestimmt, daß bei Geradeausfahrt und ohne Seitenwind, also bei unbewegter Plattform, die Fahrtkomfortbedingungen eingehalten werden.

Der Aufbau nach Fig. 4 hat noch den weiteren Vorteil, daß in einem Frequenzbereich bis ca. 10 Hz durch die Hydraulikanordnung 14 auch der Fahrkomfort verbessert werden kann. Das ist insbesondere dann notwendig, wenn man billige elastische Fahrbahnträger einsetzen will, deren Durchbiegung unter Last bis zu ca. 13 mm beträgt. Es ergibt sich damit eine Girlande, der die Gestelle mit einer Amplitude von ca. 6,5 mm folgen. Bei einer Geschwindigkeit von 400 km/h und einer Trägerlänge von 25 Metern ergibt sich damit eine zugeordnete Frequenz von f = v/l = 4,4 Hz. Eine passive Feder, die die Komfortbedingungen dann noch einhalten sollte, müßte sehr weich und damit sehr voluminös werden. Erheblich vorteilhafter ist es, über die Hydraulikanordnung 14 das Verhalten einer weichen Feder nachzubilden, wobei die Hydraulikanordnung dann stets entgegen der Bewegung des Gestells 1 arbeitet und so die Fahrgastkabine 2 annähernd in Ruhe hält.

Fig. 5 zeigt schematisch ein Blockschaltbild zur Ansteuerung der Hydraulikanordnung 14 für die Zwischenplatte 16 als Niveauausgleich. Dabei ist mit 17 ein Tiefpaßfilter bezeichnet, dessen Zeitkonstante vorzugsweise bei 1 s oder mehr liegt. Der Istwert a für die Federauslenkung wird mit dem Sollwert aₛₒₗₗ in einem Differenzglied verglichen und das Ergebnis über einen Regelverstärker 18 der Hydraulikanordnung 14 zugeführt.

Die erfindungsgemäße Aufhängung mit aktiven Dämpfungsgliedern bietet also eine weiche Federwirkung bei kleinen Störungen und eine harte Kopplung zwischen Fahrgastkabine und Gestellen bei großen Störungen, wobei die Fahrgeschwindigkeit auch bei starkem Seitenwindeinfluß nicht reduziert werden muß.

## Patentansprüche

1. Aufhängung für Fahrzeuge, insbesondere für schienengebundene Hochgeschwindigkeitsfahrzeuge, die zwischen der Fahrgastkabine (2) und dem Fahrgestell (1) angeordnet ist und die mindestens eine weiche Feder (3) mit niedriger Abfederungsfrequenz sowie ein parallel zu ihr geschaltetes Dämpfungsglied (4) mit steuerbarem Dämpfungsgrad aufweist, wobei das Dämpfungsglied (4) als aktives Dämpfungsglied mit einem Hydraulikkolben (8) und einem über ein Drosselventil (7) steuerbaren Bypass (6) ausgebildet ist und das Drosselventil (7) mit einer Steuereinrichtung verbunden ist, die es als Funktion der Auslenkungsgeschwindigkeit der Feder (3) oder Beschleunigungswerten der Fahrgastkabine (2) und des Fahrgestells (1) öffnet oder schließt,
**dadurch gekennzeichnet,**
daß dem Dämpfungsglied (4) neben dem steuerbaren Bypass (6) ein zweiter Bypass (5) mit konstanter Drosselwirkung zugeordnet ist und daß die Steuervorrichtung die seitlichen Beschleunigungswerte der Fahrgastkabine (2) und des Fahrgestells (1) berücksichtigt.

2. Aufhängung nach Anspruch 1,
**dadurch gekennzeichnet**,
daß die Steuervorrichtung einen ersten Sensor für die Messung des Federweges aufweist, der mit einem Differenzierglied (11) verbunden ist, einen zweiten Sensor für die Querbeschleunigung der Fahrgastkabine (2) aufweist, der mit dem Eingang eines ersten Filters (9) verbunden ist, einen dritten Sensor für die Querbeschleunigung des Fahrgestells (1) aufweist, der mit dem Eingang eines zweiten Filters (10) verbunden ist, ein Differenzglied aufweist, das mit den Ausgängen der beiden Filter (9, 10) verbunden ist und eine Auswahlschaltung (12) aufweist, die sowohl mit dem Differenzglied als auch mit dem Differenzierglied (11) verbunden ist und deren Ausgang mit dem Drosselventil (7) verbunden ist.

3. Aufhängung nach Anspruch 2,
**dadurch gekennzeichnet**,
daß die Steuervorrichtung derart ausgelegt ist, daß die Dämpfung (d) des Dämpfungsgliedes (4) im mittleren Bereich der Signale konstant ist und bei Überschreiten dieses Bereiches ansteigt.

4. Aufhängung nach Anspruch 1,
**dadurch gekennzeichnet**,
daß der zweite Bypass (5) mit einer Sicherheitsdrossel versehen ist, die im regulären Betrieb geschlossen ist und bei Ausfall des Drosselventils (7) diesen Bypass (5) öffnet.

5. Aufhängung nach einem der vorhergehenden Ansprüche,
**dadurch gekennzeichnet**,
daß eine zusätzliche Feder (15) vorgesehen ist, deren eines Ende am Unterteil der Fahrgastkabine (2) befestigt ist und deren anderes Ende an einer Zwischenplatte (16) befestigt ist, daß parallel zur zusätzlichen Feder (15) ein passives Dämpfungsglied (13) zwischen Fahrgastkabine (2) und Zwischenplatte (16) vorgesehen ist und daß die Zwischenplatte (16) über eine aktive Hydraulikanordnung (14) mit dem Fahrgestell (1) verbunden ist.

6. Aufhängung nach Anspruch 5,
**dadurch gekennzeichnet,**
daß die aktive Hydraulikanordnung (14) mit einer Steuervorrichtung verbunden ist, die einen Sensor für das Federungssignal verwendet und des weiteren einen Sollwertgeber, ein Differenzglied, einen Regelverstärker (18) und ein Tiefpaßfilter (17) aufweist.

## Claims

1. Suspension for vehicles, particularly for rail-bound high-speed vehicles, which is arranged between the passenger car (2) and the chassis (1) and which comprises at least one soft spring (3) with low spring rate as well as a damping element (4) connected in parallel therewith and having a controllable damping rate, wherein the damping element (4) is constructed as an active damping element with a hydraulic piston (8) and a bypass (6) controllable by way of a throttle valve (7) and the throttle valve (7) is connected with a control device which opens or closes it as a function of the deflection speed of the spring (3) or acceleration values of the passenger car (2) and the chassis (1), characterised thereby that apart from the controllable bypass (6) a second bypass (5) with constant throttle effect is associated with the damping element (4) and that the control device takes into consideration acceleration values of the passenger car (2) and of the chassis (1).

2. Suspension according to claim 1, characterised thereby that the control device comprises a first sensor for the measurement of the spring travel, which is connected with a differentiating element (11), a second sensor for the transverse acceleration of the passenger car (2), which is connected with the input of a first filter (9), a third sensor for the transverse acceleration of the chassis (1), which is connected with the input of a second filter (10), a difference-forming element which is connected with the outputs of the two filters (9, 10), and a selection circuit (12) which is connected with both the difference-forming element and the differentiating element (11) and the output of which is connected with the throttle valve (7).

3. Suspension according to claim 2, characterised thereby that the control device is so designed that the damping (d) of the damping element (4) is constant in the mean range of the signal and rises on exceeding of this range.

4. Suspension according to claim 1, characterised thereby that the second bypass (5) is provided with a safety throttle, which is closed in normal operation and opens this bypass (5) on breakdown of the throttle valve (7).

5. Suspension according to one of the preceding claims, characterised thereby that an additional spring (15) is provided, the one end of which is fastened to the lower part of the passenger car (2) and the other end of which is fastened to an intermediate plate (16), that a passive damping element (13) is provided between passenger car (2) and intermediate plate (16) and parallel to the additional spring (15), and that the intermediate plate (16) is connected by way of an active hydraulic arrangement (14) with the chassis (1).

6. Suspension according to claim 5, characterised thereby that the active hydraulic arrangement (14) is connected with a control device, which uses a sensor for the springing signal and further comprises a target value transmitter, a difference-forming element, a regulating amplifier (18) and a low-pass filter (17).

## Revendications

1. Suspension pour voitures, en particulier pour voitures à haute vitesse, liées au rail, suspension disposée entre la caisse (2) de la voiture de voyageurs et le bogie (1) et présentant au moins un ressort mou (3) à basse fréquence d'oscillation ainsi qu'un élément amortisseur (4), à degré d'amortissement pilotable, monté en parallèle avec le ressort, suspension dans laquelle l'élément amortisseur (4) est conçu sous forme d'élément amortisseur actif avec un piston hydraulique (8) et un bypass (6) pilotable au moyen d'un robinet d'étranglement (7) et dans laquelle le robinet d'étranglement (7) est relié à un dispositif de commande qui l'ouvre ou le ferme en fonction de la vitesse de déviation du ressort (3) ou des valeurs de l'accélération de la caisse (2) de la voiture de voyageurs et du bogie (1),
suspension caractérisée
par le fait qu'à l'élément amortisseur (4) correspond, en plus du bypass pilotable (6), un second bypass (5) à effet d'étranglement constant et que le dispositif de commande prend en compte les valeurs de l'accélération latérale de la caisse (2) de la voiture de voyageurs et du bogie (1).

2. Suspension selon la revendication 1,
caractérisée
par le fait que le dispositif de commande présente, pour la mesure de la course élastique, un premier capteur qui est relié à un élément différentiateur (11), présente aussi, pour l'accélération transversale de la caisse (2) de la voiture de voyageurs, un second capteur qui est relié avec l'entrée d'un premier filtre (9), présente aussi, pour l'accélération transversale du bogie (1), un troisième capteur qui est relié avec l'entrée d'un second filtre (10), présente aussi un élément soustracteur qui est relié avec les sorties des deux filtres (9, 10) et présente aussi un sélecteur (12) qui est relié aussi bien avec l'élément soustracteur qu'avec l'élément différentiateur (11) et dont la sortie est reliée avec le robinet d'étranglement (7).

3. Suspension selon la revendication 2,
caractérisée
par le fait que le dispositif de commande est conçu de façon que l'amortissement (d) de l'élément amortisseur (4) soit constant sur la plage médiane des signaux et croisse en cas de dépassement de cette plage.

4. Suspension selon la revendication 1,
caractérisée
par le fait que le second bypass (5) comporte un robinet d'étranglement de sécurité qui est fermé en marche régulière et ouvre ce bypass (5) en cas de défaillance du robinet d'étranglement (7).

5. Suspension selon l'une des revendications précédentes,
caractérisée
par le fait qu'est prévu un ressort supplémentaire (15) dont l'une des extrémités est fixée à la partie inférieure de la caisse (2) de la voiture de voyageurs et dont l'autre extrémité est fixée à un plateau intermédiaire (16), par le fait que, parallèlement au ressort supplémentaire (15), un élément amortisseur passif (13) est prévu entre la caisse (2) de la voiture de voyageurs et le plateau intermédiaire (16) et par le fait que le plateau intermédiaire (16) est relie au bogie (1) par l'intermédiaire d'un mécanisme hydraulique actif (14).

6. Suspension selon la revendication 5,
caractérisée
par le fait que le mécanisme hydraulique actif (14) est relié à un dispositif de commande qui emploie un capteur pour le signal de course élastique et de plus un émetteur de valeur prescrite, un élément soustracteur, un amplificateur de réglage (18) et un filtre passe-bas (17).
